# EUROPEAN PATENT SPECIFICATION

(11) **EP 2 410 759 B1**
(45) Date of publication and mention of the grant of the patent: **05.09.2018**
(21) Application number: 11174431.4
(22) Date of filing: 19.07.2011
(51) Int. Cl.: H04N 21/8358, H04N 21/845, H04N 21/2347, H04N 21/472

(54) **A method and apparatus for delivering watermarked digital media content to a user upon request**
Verfahren und Vorrichtung zur Lieferung von digitalem Medieninhalt mit Wasserzeichen an einen Benutzer auf Anfrage
Procédé et appareil pour fournir sur demande un support numérique tatoué à un utilisateur

(30) Priority: 21.07.2010 US 366232 P
(43) Date of publication of application: 25.01.2012
(73) Proprietor: Nagravision S.A., 1033 Cheseaux-sur-Lausanne (CH)
(72) Inventor: Nicolas, Christophe, 1162 Saint-Prex (CH); Main, Alexander, 1033 Cheseaux-sur-Lausanne (CH); Sarda, Pierre, 75015 Paris (FR)
(74) Representative: Wenger, Joel-Théophile

(56) References cited:
- WO-A1-2010/051436
- WO-A2-2007/065719
- WO-A2-2007/090795
- WO-A2-2009/032214
- DE-A1-102004 056 336
- FR-A1- 2 858 733
- US-B2- 6 724 914
- WALKER M D ET AL: "MOBILE VIDEO-STREAMING", BT TECHNOLOGY JOURNAL, SPRINGER, DORDRECHT, NL, vol. 21, no. 3, 1 July 2003 (2003-07-01), pages 192-202, XP001171241, ISSN: 1358-3948, DOI: 10.1023/A:1025183704729
- FIAT A ET AL: "DYNAMIC TRAITOR TRACING", JOURNAL OF CRYPTOLOGY, SPRINGER, NEW YORK, NY, US, vol. 14, no. 3, 1 June 2001 (2001-06-01), pages 211-223, XP001077668, ISSN: 0933-2790

## Description

### TECHNICAL DOMAIN

The present invention relates to methods and apparatus for embedding and for detecting user-specific watermarks or fingerprints in digital information signals. The invention also relates to the field of adaptive streaming in the transmission of a digital information signal and is particularly targeted at an environment where the reception of such a transmission is requested, as in a pay per view TV environment for example.

### STATE OF THE ART

United States Patent Application Publication Number US 2008/0010653 A1 discloses methods and apparatus for controlling access to and usage of digital information by use of watermarking techniques. Such watermarking techniques allow an owner of a transmitted digital media object such as audio-video content to apply control over unauthorised redistribution of copies of such transmitted content. The invention allows notably for redistributors of such content to be identified. The document discloses techniques which allow for an owner of digital content to be able to trace a user who has requested a particular content and who has redistributed the content without authorisation. The technique involves the content owner storing the digital content with a number of predetermined portions of the content missing. The thus stored partial content can be either broadcast to a plurality of users or delivered to one or more users on request. Such users will therefore be able to consume the content at a somewhat reduced quality. In order to have access to a high quality version of the content, the user has to request the missing portions from the content owner. The content owner watermarks the missing portions using user-specific watermark information before delivering the watermarked missing portions to the user and the user-specific watermark information is stored by the content owner. In this way, should the user attempt to redistribute the complete content without authorisation and should the content owner intercept a transmission of the redistributed content, then the content owner can identify the fraudulent user.

The method described in this publication is particularly appropriate for "luring" techniques, whereby a particular content is made available for consumption by users but at a somewhat degraded quality. By withholding certain portions of a content and allowing a user to consume the remaining content a user can be "lured" or otherwise encouraged into making a request for and paying for the missing portions so that he may enjoy the content at its full quality. Since the missing portions will be watermarked following the user's request for those portions, any attempt made by that user to pass on the complete content will be subject to detection.

Adaptive streaming techniques have been described in the state of the art relative to the transmission of digital information signals, such as audio-video content, especially in an environment where the transmission of such content is subject to constraints associated with a finite bandwidth allowed for such transmission or the processing power available using a given piece of viewing hardware/software. Adaptive streaming techniques involve the preparation and storage of a plurality of streams each representing the same content, each stream delivering the same content at a different bit-rate. Depending on the bandwidth available for the transmission or the capability of the equipment used by a user to make use of the transmission, the stream representing the content at a bit-rate which is appropriate for the transmission conditions and/or processing conditions at a particular time is used. As the transmission conditions or the processing conditions evolve, so the appropriate bit-rate can evolve i.e. different streams are selected for transmission depending on the evolving transmission/processing conditions, hence we speak of "adaptive streaming".

Other documents in the state of the art which deal with adaptive streaming include a paper published in BT Technology Journal, Vol 21, No. 3, July 2003, entitled "Mobile Video-Streaming", in which well known techniques for streaming video to a mobile device are described, as well as a proprietary system known a "Fastnets", which advantageously elastic encoding involving the preparation of pre-encoded streams. Another such document is International Patent Application Publication number 2009/032214A2, which discusses adaptive streaming wherein the adaptation is based not only on network availability but also on the capabilities of the end device towards which the content is to be streamed. In which case, not only are higher quantized versions of content reserved for periods when bandwidth availability is low, but also for when the device which is to receive the streamed content has limited capacity for processing such content. This is based on the premise that streaming content of to high a quality would be a waste of resources when the end device is only capable of adequately processing lower quality content.

Prior art publications which deal with watermarking include International Patent Application Publications numbers 2007/090795A2, 2007/065719A2 and 2010/051436A1, each of which describe delivering personalised versions of content to different receivers depending on a unique identifier in the receiver. By personalised, it means that the unique identifier may be used as a key in an algorithm to modify the content, thereby rendering it "personalised".

Other prior art publications in the domain of watermarking includes French Patent Application Publication number 2858733A1, which focuses on watermarks which are imperceptible to the user or otherwise hidden or undetectable under normal use. Such watermarks are reputed as being more difficult to detect and to remove. These watermarking techniques described in the state of the art involve processing of entire content.

United States Patent Publication number 6724914B2 discloses a distributed computing system for detecting and decoding a watermark wherein emphasis is placed on rendering the task efficient so that it may be performed on hand-held devices having limited computing capability. To save on bandwidth, which is important in a distributed system, a first attempt is made to detect the watermark in a highly quantized version of the content before resorting to lower and lower quantized versions if the detection fails. Such a system may be known as adaptive in that it adapts the quality of the content in which the watermark is to be detected until the quality is sufficient for such watermark to be detected. The adaptability in this case is therefore not the same adaptability as referred to in known adaptive streaming systems.

International Patent Application Publication Number WO 2004/040913 A1 describes a method for embedding a watermark in an information signal, wherein the watermark embedding process is dependent on the bit-rate of the signal to be watermarked. One of the requirements of a watermark is that it should not reduce the quality of the signal which is watermarked. Another requirement, although conflicting with the first requirement is that the watermark should be robust in that it should not be easy to remove by a third party. The method described in this document allows for a good trade-off to be achieved whereby the robustness of the watermark is made to be adequate for a signal having a given bit-rate, while the degradation of the signal due to the watermark is kept to a minimum. This allows for watermarking to be used in an adaptive streaming context for example. The watermark obtained using the process described in the document however is independent of the targeted user of the information signal and therefore does not as such allow for "fingerprinting" of a content which is made available to a particular user on demand.

### BRIEF SUMMARY OF THE INVENTION

As is generally known in the state of the art, watermarking of digital content, whereby the content is coded or otherwise encrypted according to some unique identifying parameter associated with a requestor of such content, can lead to significant overheads whereby the watermarking process becomes costly in terms of processing power and transmission bandwidth as well as in terms of the treatment of such watermarked content at the reception end. It is a goal of the present invention to allow for the benefits associated with watermarking technology to be maintained (i.e. the tracing of a source of so-called content leak for example) while at the same time allowing for the drawbacks due to the resulting increased overhead to be addressed. A particular content which is to be made available by a content provider to potential content users is prepared by encoding the content into a plurality of different encoded streams. Each of the encoded streams is prepared by encoding according to a different bit rate and comprises a plurality of chunks, each chunk individually retrievable by a requestor. Upon request of said content by a user, the chunks making up the content are selected from the plurality of the different encoded streams and a subset from that plurality of chunks is watermarked using a unique identifying parameter associated with the requestor. The invention is defined in the appended claims.

### BRIEF DESCRIPTION OF THE DRAWINGS

The present invention will be better understood thanks to the detailed description which follows and the accompanying drawings, which are given as non-limiting examples of embodiments of the invention, namely:
Fig. 1, representing a schematic of a device in which an embodiment of the present invention may be deployed;
Fig. 2, representing a system comprising a content provider and a user connected to each other via a content delivery network, in which an embodiment of the present invention may be deployed.

### DETAILED DESCRIPTION

An embodiment of the present invention may be deployed in a content delivery system wherein a provider of digital media content, such as audio-video content for example, makes such content available to a user or a plurality of users upon request, usually for a fee. Such systems are known as video on demand systems.

The content provider may feel a need to protect the content he makes available to such a requestor from the possibility that the requestor then makes the content available to further users without the authorisation of the content provider, possibly resulting in a loss of potential revenue perceived by the content provider for such content.

According to an embodiment of the present invention, the content provider prepares a particular content with a view to transmitting, or otherwise making available for access, said prepared content upon request. Such preparation involves encoding or otherwise converting the content into a plurality of encoded or converted streams, each encoded stream comprising a plurality of chunks or segments. This is similar to adaptive streaming technology in that several encoded streams are prepared representing the same content, with each stream being encoded using a different bit-rate. The result according to the embodiment of the present invention is that a plurality of streams encoded at different bit-rates is prepared, each stream comprising a plurality of chunks. The plurality of differently-encoded streams may exist in a single file or as multiple files. As in known adaptive streaming techniques, when a user requests a particular content, the content provider transmits the requested content to the user by transmitting chunks from one or other of the encoded streams to the user. It is worth noting that the term "transmission of content" according to embodiments of the present invention, may otherwise mean "allowing content to be received", in that the provider may either actively transmit a content to a requestor or he may place the content on a server and allow a requestor to have access to the content. As in adaptive streaming technology, the selection of the encoded stream from which a particular chunk comes may be made based on either the available transmission bandwidth at the moment that the particular requested chunk is to be transmitted or the computing capacity available to process the chunk at the receiving end for example. In other words, the selection from where a particular chunk comes from at a particular time during the delivery of the content may depend on the maximum usable bandwidth at which a transmission may be made at that time, where the maximum usable bandwidth may be dictated by the capacity of the transmission medium or the computation capacity of the requestor. As in adaptive streaming technology, the usable bandwidth may be determined a plurality of times during delivery of a requested content and so may be referred to as a current usable bandwidth.

In this manner, as in adaptive streaming techniques, a particular content will be received by a user as a plurality of chunks, each chunk coming from a stream encoded at a particular bit-rate.

Proper reconstruction of the chunks at the receiving end can be facilitated through the use of a playlist-type mechanism. Such a mechanism may be used to allow for the reconstruction of the chunks into a usable format in terms of the order of the chunks, the source of the chunks (i.e. from which stream encoded at which rate), whether the chunk is encrypted or not and, if encrypted, the source of the decryption key for example.

The electronic fingerprinting or watermarking technique which is permitted according to an embodiment of the present invention allows for only a subset of the complete set of chunks representing an entire content to be watermarked, rather than watermarking the all of the chunks from the entire content. According to this embodiment, only a few chunks are watermarked using a unique identifying parameter associated with the requestor of the content. This has the advantage of providing sufficiently robust watermarking while minimising the amount of computer power necessary to achieve it. This process of watermarking a selected number of chunks is fast enough to ensure real-time processing and transmission to the user without the disadvantage of an added delay, apparent in the state of the art. Indeed according to a particular embodiment of the present invention, deployed in a content delivery system having an encoder for generating the streams of encoded content, the chunks to be watermarked may be pre-processed by the encoder in preparation for watermarking thus allowing the subsequent watermark embedding process to be achieved in a very efficient manner by a watermarking module. According to one embodiment the watermarked chunks are encrypted and the non-watermarked chunks are not encrypted, while according to another embodiment at least some or all of the non-watermarked chunks are also encrypted.

The watermarking process itself can be any of the known watermarking techniques. For example according to one embodiment, watermarking involves the embedding within the content of a unique identifying parameter associated with the requestor of the content. In other embodiments of the present invention the watermarking of a chunk is achieved by encrypting the chunk whereby the encryption involves the use of a unique identifying parameter associated with the requestor of the content.

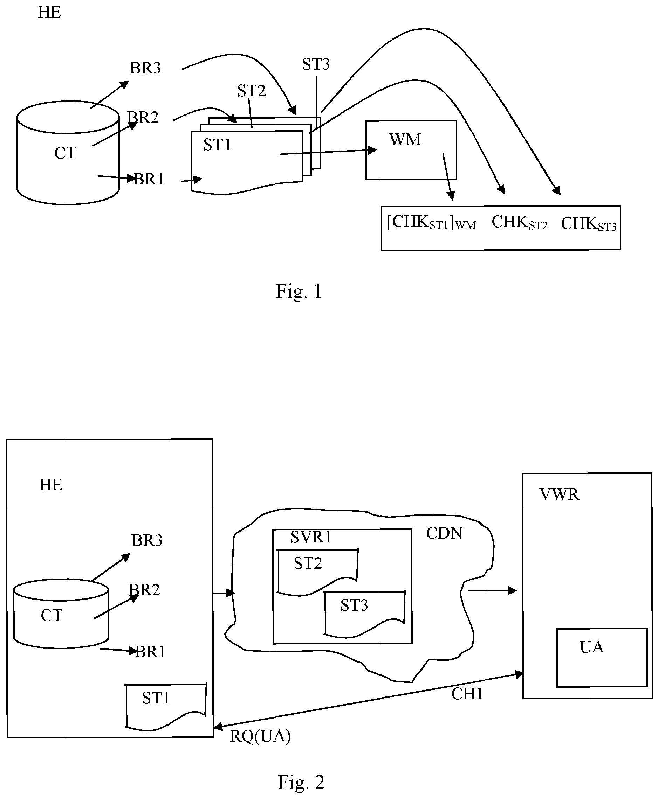

Figure 1 shows a schematic of a device in which an embodiment of the present invention may be deployed. The content provider (HE) encodes a particular content (CT) into a plurality of encoded streams (ST1, ST2, ST3) and stores the encoded streams, each of the encoded streams being encoded according to a different bit-rate (BR1, BR2, BR3). Each encoded stream comprises a plurality of chunks (CHK1_{ST1}, CHK2_{ST1}, CHK3_{ST1}, CHK1_{ST2}, CHK2_{ST2}, CHK3_{ST2}). According to a particular embodiment, following a request from a user for digital media content, the provider (HE) selects a plurality of chunks allowing for the content to be reconstructed, with different chunks coming from different streams according to a sequence which is predetermined by the provider. A subset of the plurality of chunks is watermarked using a unique identifying parameter associated with the requestor. The provider may also generate a playlist to keep track of the sequence and generally to keep track of information relating to the origin of the chunks, the bit-rate of the encoded stream from where the chunk came, whether or not the chunk is watermarked and whether or not the chunk is encrypted for example. This playlist may be used in allowing the user to properly reconstruct the chunks to form the content, especially in respect of the sequence or order in which the chunks are to be reassembled. When a request for content is received, the request includes a unique parameter associated with the requestor. The provider then watermarks the subset of plurality of chunks ([CHK1_{ST1}]_{WM}, [CHK2_{ST1}]_{WM}) using the unique identifying parameter associated with the requestor (UA). The plurality of chunks, including the watermarked chunks, is then transmitted to the requestor and the requestor reconstructs the content. According to a particular embodiment, the provider also transmits the playlist to the requestor to allow him to reconstruct the content using the appropriate chunks according to the determined sequence. If the user retransmits the reconstructed content without the authorisation of the provider and if the provider manages to intercept said retransmission, then thanks to the watermark, detectable and decodable by the provider, the user who retransmitted the content may be identified.

According to another embodiment the decision as to which encoded stream a particular chunk will come from, i.e. the sequence, depends on the capability of the transmission medium at the time of transmission. In this case the provider periodically interrogates the capability of the transmission medium and selects the chunks form the appropriate encoded stream accordingly. Whenever a chunk is selected from a predetermined encoded stream (the one which is encoded using the smallest bit-rate for example), that chunk is watermarked before transmitting. The playlist is maintained in order to allow the requestor who receives the playlist to properly reconstruct the content in embodiments where such a playlist is used.

According to one embodiment, non-watermarked chunks are transmitted without encrypting while according to another embodiment the non-watermarked are transmitted after encrypting.

According to another embodiment of the present invention, the provider can predetermine which chunks will be watermarked and can cache non-watermarked chunks of content at one place on the content delivery network while the chunks to be watermarked are stored at another place on the content delivery network. When the content is requested, the latter chunks are then watermarked using the unique identifying parameter associated with the requestor. According to a variation of this embodiment, the chunks to be watermarked are pre-processed before being cached within the content delivery network. Such pre-processing may take place at the encoder for generating the streams of encoded content whereby the stream intended to be the source of watermarked chunks is already prepared by watermarking the chunks using the unique parameter associated with the requesting user as soon as such information is made available. The process of providing a watermarked set of chunks comprising a subset of watermarked chunks and a subset of non-watermarked (remaining) chunks is thereby rendered more efficient.

Fig. 2 illustrates a system in which an embodiment of the present invention may be deployed. This embodiment allows for more efficient use of bandwidth consumption and load at the content provider. The system comprises a content provider (HE) and a user or requestor of content (VWR). The provider and the requestor are linked via a content delivery network (CDN) which may comprise a server (SVR) for storing content. The requestor is connected to the provider via a bidirectional communication channel (CH1). The provider encodes the content (CT) into a plurality of encoded streams (ST1, ST2, ST3) each at a different bit-rate (BR1, BR2, BR3), each stream comprising a plurality of chunks (CHK). A subset of the plurality of streams (ST2) is stored on a server (SVR) somewhere on the content delivery network (CDN) and at least one stream (ST1) is stored by the provider or at another place on the network for future watermarking. The streams which are not to be watermarked may or may not be encrypted according to different embodiments of the invention. Similarly the stream which is to be watermarked may or may not be encrypted. The watermarking process itself may or may not result in the chunks of the stream being encrypted depending on different embodiments of the present invention. A user (VWR) makes a request (RQ) for a particular content (CT) via the bidirectional communication channel (CH1), said request including a unique identifying parameter (UA) associated with the requestor (VWR). The requestor downloads the chunks from the stream or streams (ST2) stored on the server or servers (SVR) of the content delivery network (CDN). The requestor also receives the complement of chunks necessary to reconstruct the requested content (CT), said complement of chunks being watermarked by the provider using the unique identifying parameter (UA) associated with the requestor. The choice of which chunks are to be watermarked may be predetermined by the provider before a request is received or, according to another embodiment, the choice is made at the time of transmission and is based on the capability of the content delivery network at a particular time during the transmission or on the computing capabilities of the requestor's apparatus during the transmission. A playlist-type mechanism may be maintained in order to facilitate the reconstruction of the chunks from the various streams to give the requested content.

In an embodiment where the selection of chunks to be modified is based on the usable bandwidth, it could ensue that the resulting so-called watermarked content does not actually contain any watermarked chunks. This could happen for example if the usable bandwidth were always high enough to allow for streams encoded at the highest bit-rate to be delivered. In this case it is sufficient for the content delivery system to include a mechanism which makes sure that at least one watermarked chunk is included in a watermarked content.

As mentioned previously, according to embodiments of the present invention, a pre-processing step may be carried out when generating the plurality of encoded streams in order to have watermarked chunks already prepared for a subsequent watermark embedding or insertion process.

According to one embodiment of the present invention the watermarked chunks require a separate key for decryption and the requestor needs to be properly authenticated before the chunks are delivered. The authentication information could indeed be used to embed unique information in the watermark/fingerprint.

According to another embodiment, the content delivery network comprises an insertion server which handles the insertion of the watermarked chunks into the delivery of a requested content. This allows the simplification of the gathering of information during a process for detecting watermarks whenever required. Such an insertion server would need to respond to many requests however since only a few chunks of a particular content requires to be watermarked, according to the invention, then the load would be distributed better than in state of the art watermarking solutions wherein the whole content is watermarked. The number of chunks to be watermarked and their location within the content may be optimised for best performance while maintaining adequate security.

The method proposed by the present invention allows for the content to be identified using existing mechanisms for retrieving a signature of a content. Specific chunks can be identified within the content and the fingerprint/watermark retrieved in a very efficient way thanks to the invention.

According to embodiments of the present invention, when a user receives a requested content he receives all of the chunks required to be able to reconstruct and view the entire requested content. The provider does not defer the transmission of chunks that have been pre-determined as requiring watermarking pending a further request from the user for any such missing chunks. Indeed, the content which is transmitted following a request is sufficient to allow an authorised user to view the content with no degradation as would be the case had some chunks been withheld from the transmission. All non-watermarked and watermarked chunks are transmitted following a request for the content.

## Claims

1. An adaptive streaming method for delivering on request, digital media content (CT) from a provider (HE), to a user (VWR), said digital media content (CT) comprising a watermark (WM) relating said digital media content (CT) to said user (VWR), said watermark (WM) being based on a unique parameter associated with the user (UA), said method comprising:
encoding said digital media content (CT) into a plurality of encoded streams (ST1, ST2, ST3), each of said encoded streams (ST1, ST2, ST3) being encoded according to a different bit-rate (BR1, BR2, BR3), each encoded stream (ST1, ST2, ST3) comprising a plurality of chunks (CHK1_{ST1}, CHK2_{ST1}, CHK1_{ST2}, CHK2_{ST2}), the digital media content (CT) being reconstructable using a plurality of said chunks (CHK1_{ST1}, CHK2_{ST1}, CHK1_{ST2}, CHK2_{ST2}) selected from the plurality of encoded streams;
selecting, by the provider (HE), a set of chunks in a sequence allowing for reconstruction of the digital media content (CT), said selection being made from said plurality of encoded streams (ST1, ST2, ST3);
selecting, by the provider (HE), a subset from said set of chunks, thereby giving a subset of selected chunks and a subset of remaining chunks, said subset of selected chunks coming from a predetermined one (ST1) from the plurality of encoded streams (ST1, ST2, ST3);
after receiving from the user (VWR), via a first communication channel (CH1), the request (RQ) for the digital media content (CT), said request (RQ) comprising a unique parameter (UA) associated with the user (VWR), watermarking (WM) the subset of selected chunks, said watermark being based on said unique parameter (UA);and
delivering a watermarked content to the user (VWR), said watermarked content including the watermarked subset of selected chunks and the subset of remaining chunks.

2. The method according to claim 1, said delivery being made via a content delivery network (CDN), the method further comprising:
caching the first subset at a first place on the content delivery network;
caching the remaining subset at a second place on the content delivery network, different from the first place;
said delivery involving recovering the watermarked subset of selected chunks from the first place on the content delivery network and the remaining subset of chunks from the second place on the content delivery network.

3. The method according to either of claims 1 or 2, wherein it further comprises:
generating by the provider (HE) a playlist comprising the sequence of chunks; and
delivering the playlist to the user (VWR).

4. The method according to claim 3, wherein the playlist is delivered via the first communication channel (CH1).

5. The method according to any of claims 1 to 3, wherein the watermarked subset of selected chunks is delivered via the first communication channel (CH1).

6. The method according to any of the preceding claims, wherein the sequence is predetermined by the provider.

7. The method according to any of the preceding claims, wherein it further includes a step of determining by the provider (HE) at least once during said delivery on request, a current usable bandwidth, said selection of the set of chunks being based on the current usable bandwidth.

8. The method according to any of claims 1 to 7, wherein the watermarked chunks are encrypted.

9. The method according to any of the preceding claims, wherein at least some of the non-watermarked chunks are encrypted.

10. An adaptive streaming content delivery system comprising:
a content provider (HE) for storing digital media content (CT);
at least one encoder for generating, from said stored digital media content (CT), a plurality of streams of encoded content (ST1, ST2, ST3) each comprising a plurality of chunks, each of said streams of encoded content being encoded at a different bit rate (BR1, BR2, BR3);
a selection module to select a set of chunks from said streams of encoded content in a sequence allowing reconstruction of said digital media content (CT);
a communication channel (CH1) configured to receive, from a user (VWR), a request (RQ) for the content (CT), said request (RQ) comprising a unique parameter (UA) associated with the user (VWR);
and
a delivery channel to deliver at least the content to the user, said delivery channel comprising at least the communication channel (CH1);
said content delivery system **characterised in that** it further comprises:
a watermarking module (WM) to watermark at least one chunk, giving a watermarked content, said watermark being based on the unique parameter (UA);
a filter to select a subset from the set of chunks from a predetermined one (ST1) from the plurality of encoded streams (ST1, ST2, ST3) and to send the subset to the watermarking module (WM).

11. The adaptive streaming content delivery system according to claim 10, further comprising an encryption module to encrypt at least one of the watermarked chunks.

12. The content delivery system according to either of claim 10 or 11, wherein it further comprises a current usable bandwidth detector operably connected to the selection module and configured to detect a current usable bandwidth at least once during the delivery of the watermarked content, said selection of a set of chunks being based on the current usable bandwidth.

13. The content delivery network according to any of claims 10 to 12, wherein the selection module is further configured to generate a playlist to be delivered to the user (VWR), said playlist comprising at least said sequence.

14. The content delivery network according to any of claims 10 to 13, wherein the delivery channel is configured such that at least the subset of watermarked chunks is delivered via the communication channel (CH1).

## Patentansprüche

1. Adaptives Streaming-Verfahren zur Lieferung, auf Anfrage, digitalen Medieninhalts (CT) von einem Provider (HE) an einen Benutzer (VWR), besagter digitale Medieninhalt (CT) umfasst ein Wasserzeichen (WM), das besagten digitalen Medieninhalt (CT) auf besagten Benutzer (VWR) bezieht, besagtes Wasserzeichen (WM) basiert auf einem eindeutigen Parameter, der dem Benutzer (UA) zugeordnet wird, besagtes Verfahren umfasst:
das Codieren des besagten digitalen Medieninhalts (CT) in eine Vielzahl von codierten Strömen (ST1, ST2, ST3), jeder von besagten codierten Strömen (ST1, ST2, ST3) wird nach einer anderen Bitrate codiert (BR1, BR2, BR3), jeder codierte Strom (ST1, ST2, ST3) umfasst eine Vielzahl von Blöcken (CHK1_{ST1}, CHK2_{ST1}, CHK1_{ST2}, CHK2_{ST2}), der digitale Medieninhalt (CT) ist rekonstruierbar unter Verwendung einer Vielzahl von besagten Blöcken (CHK1_{ST1}, CHK2_{ST1}, CHK1_{ST2}, CHK2_{ST2}), die aus der Vielzahl von codierten Strömen ausgewählt werden;
Auswahl, durch den Provider (HE), eines Satzes von Blöcken in einer Sequenz, die die Rekonstruierung des digitalen Medieninhalts (CT) erlaubt, wobei besagte Auswahl aus besagter Vielzahl von codierten Strömen (ST1, ST2, ST3) erfolgt;
Auswahl, durch den Provider (HE), einer Teilmenge aus besagtem Satz von Blöcken, was eine Teilmenge von ausgewählten Blöcken und eine Teilmenge von verbleibenden Blöcken ergibt, besagte Teilmenge von ausgewählten Blöcken kommt von einem vorherbestimmten (ST1) aus der Vielzahl von codierten Strömen (ST1, ST2, ST3);
nach Empfang der Anfrage (RQ) nach dem digitalen Medieninhalt (CT) von dem Benutzer (VWR), über einen ersten Kommunikationskanal (CH1), wobei besagte Anfrage (RQ) einen eindeutigen Parameter (UA) umfasst, der dem Benutzer (VWR) zugeordnet ist, erfolgt die Wasserzeichenmarkierung (WM) der Teilmenge von ausgewählten Blöcken, besagtes Wasserzeichen basiert auf besagtem eindeutigen Parameter (UA); und
Lieferung eines mit einem Wasserzeichen versehenen Inhalts an den Benutzer (VWR), besagter mit einem Wasserzeichen versehene Inhalt umfasst die mit einem Wasserzeichen versehene Teilmenge von ausgewählten Blöcken und die Teilmenge von verbleibenden Blöcken.

2. Verfahren nach Anspruch 1, wobei besagte Lieferung über ein Content Delivery Network (CDN) erfolgt, wobei das Verfahren des Weiteren folgendes umfasst:
Caching der ersten Teilmenge an einer ersten Stelle auf dem Content Delivery
Network;
Caching der verbleibenden Teilmenge an einer zweiten Stelle auf dem Content Delivery Network, die unterschiedlich von der ersten Stelle ist;
besagte Lieferung umfasst die Wiedergewinnung der mit einem Wasserzeichen versehenen Teilmenge von ausgewählten Blöcken von der ersten Stelle auf dem Content Delivery Network und die der verbleibenden Teilmenge von Blöcken von der zweiten Stelle auf dem Content Delivery Network.

3. Verfahren nach einem der Ansprüche 1 oder 2, wobei es des Weiteren umfasst:
Erzeugung, einer Wiedergabeliste mit der Sequenz von Blöcken durch den Provider (HE),; und
Lieferung der Wiedergabeliste an den Benutzer (VWR).

4. Verfahren nach Anspruch 3, wobei die Wiedergabeliste über den ersten Kommunikationskanal (CH1) geliefert wird.

5. Verfahren nach einem beliebigen der Ansprüche 1 bis 3, wobei die mit einem Wasserzeichen versehene Teilmenge von ausgewählten Blöcken über den ersten Kommunikationskanal (CH1) geliefert wird.

6. Verfahren nach einem der vorhergehenden Ansprüche, wobei die Abfolge von dem Provider vorherbestimmt wird.

7. Verfahren nach einem der vorhergehenden Ansprüche, wobei es außerdem eine Phase der Ermittlung, durch den Provider (HE), mindestens einmal während besagter Lieferung auf Anfrage, einer aktuellen verwendbaren Bandbreite umfasst, wobei besagte Auswahl des Satzes von Blöcken auf der aktuellen verwendbaren Bandbreite basiert.

8. Verfahren nach einem beliebigen der Ansprüche 1 bis 7, wobei die mit einem Wasserzeichen versehenen Blöcke verschlüsselt sind.

9. Verfahren nach einem der vorhergehenden Ansprüche, wobei mindestens einige der nicht mit einem Wasserzeichen versehenen Blöcke verschlüsselt sind.

10. Adaptives Streaming-Inhaltliefersystem mit:
einem Inhaltprovider (HE) zum Speichern digitalen Medieninhalts (CT);
mindestens einem Codierer zur Erzeugung, aus besagtem gespeichertem digitalem Medieninhalt (CT), einer Vielzahl von Strömen von codiertem Inhalt (ST1, ST2, ST3), jeder mit einer Vielzahl von Blöcken, jeder von besagten Strömen von codiertem Inhalt wird mit einer verschiedenen Bitrate codiert (BR1, BR2, BR3);
einem Auswahlmodul, um einen Satz von Blöcken aus besagten Strömen von codiertem Inhalt in einer Sequenz auszuwählen, der die Rekonstruierung des besagten digitalen Medieninhalts (CT) erlaubt;
einem Kommunikationskanal (CH1), der konfiguriert ist, um von einem Benutzer (VWR) eine Anfrage (RQ) nach dem Inhalt (CT) zu empfangen, besagte Anfrage (RQ) umfasst einen eindeutigen Parameter (UA), der dem Benutzer (VWR) zugeordnet ist; und
einem Lieferkanal, um mindestens den Inhalt an den Benutzer zu liefern, wobei der Lieferkanal mindestens den Kommunikationskanal (CH1) umfasst;
besagtes Inhaltliefersystem ist **dadurch gekennzeichnet, dass** es des Weiteren umfasst:
ein Wasserzeichenmarkierungs-Modul (WM), um mindestens einen Block mit Wasserzeichen zu markieren, was einen mit Wasserzeichen versehenen Inhalt ergibt, besagtes Wasserzeichen basiert auf dem eindeutigen Parameter (UA);
einen Filter, um eine Teilmenge aus dem Satz von Blöcken von einem vorherbestimmten (ST1) aus der Vielzahl von codierten Strömen (ST1, ST2, ST3) auszuwählen und die Teilmenge an das Wasserzeichenmarkierungs-Modul (WM) zu senden.

11. Adaptives Streaming-Inhaltliefersystem nach Anspruch 10, das des Weiteren ein Verschlüsselungsmodul umfasst, um mindestens einen der mit Wasserzeichen versehenen Blöcke zu verschlüsseln.

12. Inhaltliefersystem nach Anspruch 10 oder 11, wobei es des Weiteren einen Detektor für eine aktuelle verwendbare Bandbreite umfasst, der operativ mit dem Auswahlmodul verbunden und konfiguriert ist, um eine aktuelle verwendbare Bandbreite mindestens einmal während der Lieferung des mit einem Wasserzeichen versehenen Inhalts zu ermitteln, besagte Auswahl eines Satzes von Blöcken basiert auf der aktuellen verwendbaren Bandbreite.

13. Content Delivery Network nach einem beliebigen der Ansprüche 10 bis 12, wobei das Auswahlmodul des Weiteren konfiguriert ist, um eine Wiedergabeliste zu erzeugen, die an den Benutzer (VWR) geliefert wird, wobei die Wiedergabeliste mindestens besagte Sequenz umfasst.

14. Content Delivery Network nach einem beliebigen der Ansprüche 10 bis 13, wobei der Lieferkanal so konfiguriert ist, dass mindestens die Teilmenge von mit einem Wasserzeichen versehenen Blöcken über den Kommunikationskanal (CH1) geliefert wird.

## Revendications

1. Méthode de diffusion en continu adaptative pour distribuer sur demande un contenu multimédia numérique (CT) d'un fournisseur (HE) à un utilisateur (VWR), ledit contenu multimédia numérique (CT) comprenant un tatouage (WM) mettant en relation ledit contenu multimédia numérique (CT) avec ledit utilisateur (VWR), ledit tatouage (WM) étant basé sur un paramètre unique associé avec l'utilisateur (UA), ladite méthode comprenant :
le codage dudit contenu multimédia numérique (CT) dans une pluralité de flux codés (ST1, ST2, ST3), chacun desdits flux codés (ST1, ST2, ST3) étant codé selon un débit binaire différent (BR1, BR2, BR3), chaque flux codé (ST1, ST2, ST3) comprenant une pluralité de fragments (CHK1_{ST1}, CHK2_{ST1}, CHK1_{ST2}, CHK2_{ST2}), le contenu multimédia numérique (CT) pouvant être reconstruit utilisant une pluralité desdits fragments (CHK1_{ST1}, CHK2_{ST1}, CHK1_{ST2}, CHK2_{ST2}) sélectionnés parmi la pluralité de flux codés ;
la sélection, par le fournisseur (HE), d'un ensemble de fragments dans une séquence permettant la reconstruction du contenu multimédia numérique (CT), ladite sélection étant faite à partir de ladite pluralité de flux codés (ST1, ST2, ST3) ;
la sélection, par le fournisseur (HE), d'un sous-ensemble dudit ensemble de fragments, donnant ainsi un sous-ensemble de fragments sélectionnés et un sous-ensemble de fragments restants, ledit sous-ensemble de fragments sélectionnés provenant d'un flux prédéterminé (ST1) parmi la pluralité de flux codés (ST1, ST2, ST3) ;
après avoir reçu de l'utilisateur (VWR), via un premier canal de communication (CH1), la requête (RQ) du contenu multimédia numérique (CT), ladite requête (RQ) comprenant un paramètre unique (UA) associé avec l'utilisateur (VWR), le tatouage (WM) du sous-ensemble de fragments sélectionnés, ledit tatouage étant basé sur ledit paramètre unique (UA) ; et
la distribution d'un contenu tatoué à l'utilisateur (VWR), ledit contenu tatoué comprenant le sous-ensemble tatoué de fragments sélectionnés et le sous-ensemble de fragments restants.

2. Méthode selon la revendication 1, ladite distribution étant faite à travers un réseau de distribution de contenu (CDN), la méthode comprenant en outre :
la mise en cache du premier sous-ensemble à une première place sur le réseau de distribution de contenu ;
la mise en cache du sous-ensemble restant à une deuxième place sur le réseau de distribution de contenu, différente de la première place ;
ladite distribution impliquant la récupération du sous-ensemble tatoué de fragments sélectionnés à partir de la première place sur le réseau de distribution de contenu et le sous-ensemble restant de fragments de la deuxième place sur le réseau de distribution de contenu.

3. Méthode selon l'une quelconque des revendications 1 ou 2, où elle comprend en outre :
la génération par le fournisseur (HE) d'une liste de lecture comprenant la séquence de fragments ; et
la distribution de la liste de lecture à l'utilisateur (VWR).

4. Méthode selon la revendication 3, où la liste de lecture est distribuée via le premier canal de communication (CH1).

5. Méthode selon l'une quelconque des revendications 1 à 3, où le sous-ensemble tatoué de fragments sélectionnés est distribué via le premier canal de communication (CH1).

6. Méthode selon l'une quelconque des revendications précédentes, où la séquence est prédéterminée par le fournisseur.

7. Méthode selon l'une quelconque des revendications précédentes, où elle inclut en outre une étape de détermination par le fournisseur (HE) au moins une fois pendant ladite distribution sur demande, d'une largeur de bande utilisable courante, ladite sélection de l'ensemble de fragments étant basée sur la largeur de bande utilisable courante.

8. Méthode selon l'une quelconque des revendications 1 à 7, où les fragments tatoués sont chiffrés.

9. Méthode selon l'une quelconque des revendications précédentes, où au moins certains des fragments non tatoués sont chiffrés.

10. Système de distribution de contenu de diffusion en continu adaptative comprenant :
un fournisseur de contenu (HE) pour stocker du contenu multimédia numérique (CT) ;
au moins un codeur pour générer, à partir dudit contenu multimédia numérique stocké (CT), une pluralité de flux de contenu codé (ST1, ST2, ST3) chacun comprenant une pluralité de fragments, chacun desdits flux de contenu codé étant codé à un débit binaire différent (BR1, BR2, BR3) ;
un module de sélection pour sélectionner un ensemble de fragments desdits flux de contenu codé dans une séquence permettant la reconstruction dudit contenu multimédia numérique (CT) ;
un canal de communication (CH1) configuré pour recevoir, d'un utilisateur (VWR), une requête (RQ) du contenu (CT), ladite requête (RQ) comprenant un paramètre unique (UA) associé avec l'utilisateur (VWR) ; et
un canal de distribution pour distribuer au moins le contenu à l'utilisateur, ledit canal de distribution comprenant au moins le canal de communication (CH1) ;
ledit système de distribution de contenu étant **caractérisé en ce qu'**il comprend en outre :
un module de tatouage (WM) pour tatouer au moins un fragment, donnant un contenu tatoué, ledit tatouage étant basé sur le paramètre unique (UA) ;
un filtre pour sélectionner un sous-ensemble de l'ensemble de fragments d'un flux prédéterminé (ST1) parmi la pluralité de flux codés (ST1, ST2, ST3) et pour envoyer le sous-ensemble au module de tatouage (WM).

11. Système de distribution de contenu de diffusion en continu adaptative selon la revendication 10, comprenant en outre un module de chiffrement pour chiffrer au moins l'un des fragments tatoués.

12. Système de distribution de contenu selon la revendication 10 ou 11, où il comprend en outre un détecteur de largeur de bande utilisable courante connecté de façon opérationnelle au module de sélection et configuré pour détecter une largeur de bande utilisable courante au moins une fois pendant la distribution du contenu tatoué, ladite sélection d'un ensemble de fragments étant basée sur la largeur de bande utilisable courante.

13. Réseau de distribution de contenu selon l'une quelconque des revendications 10 à 12, où le module de sélection est configuré en outre pour générer une liste de lecture à distribuer à l'utilisateur (VWR), ladite liste de lecture comprenant au moins ladite séquence.

14. Réseau de distribution de contenu selon l'une quelconque des revendications 10 à 13, où le canal de distribution est configuré de manière qu'au moins le sous-ensemble de fragments tatoués est distribué via le canal de communication (CH1).
